# EUROPEAN PATENT SPECIFICATION

(11) **EP 0 527 555 B1**
(45) Date of publication and mention of the grant of the patent: **13.03.1996**
(21) Application number: 92306272.3
(22) Date of filing: 08.07.1992
(51) Int. Cl.: A01D 85/00

(54) **Mobile harvester for hay bales**
Fahrbares Ballsammelgerät
Collecteur mobile de balles

(30) Priority: 10.04.1992 CA 2065783; 13.08.1991 GB 9117450
(43) Date of publication of application: 17.02.1993
(73) Proprietor: Cardinal, Marcel E., Mirabel, Quebec J0N 1KO (CA)
(72) Inventor: Cardinal, Marcel E., Mirabel, Quebec J0N 1KO (CA)
(74) Representative: Price, Paul Anthony King

(56) References cited:
- AU-B- 568 143
- GB-A- 2 106 830
- US-A- 4 043 461
- US-A- 4 290 733
- US-A- 4 310 275
- US-A- 4 312 245

## Description

The present invention relates to a mobile harvester which, for example, has hay bale receiving, loading and unloading platforms and is arranged to receive already formed bales from a baler.

United States Patent No. 4,310,275 describes a tiltable platform hay bale accumulator which has a flat static platform over which the hay bales slide by being pushed one against the other. The same single platform is provided with a tilting mechanism for dropping the hay bales when the platform is fully loaded.

In the U.S. patent, the surface of the platform is smooth and relatively small so that the hay bales will slide off the platform when the latter is fully loaded and tilted. The hay bales will be dropped at random on the field while the pulling tractor moves over the field, i.e. whenever the platform is loaded and tilted.

The document GB-A-2 106 830 discloses a mobile harvester for handling bales. This harvester is not provided with a separate unloading platform sloping from the level of the loading platform to the level of the ground.

According to the present invention, there is provided a mobile harvester for handling hay bales, said harvester comprising: a loading platform positionable to the side of a receiving platform which is arranged to successively and transversely load rows of bales onto said loading platform, said loading platform having a first conveyor mechanism for moving bales in the longitudinal direction of rows of bales on said loading platform; first means for actuating said first conveyor mechanism; an unloading platform positioned adjacent to said loading platform for receiving bales from said first conveyor mechanism, said unloading platform having a second conveyor mechanism for moving bales in the longitudinal direction of rows of bales on said unloading platform and for discharging those bales from a first end of said unloading platform opposite said loading platform; and second means for actuating said second conveyor mechanism; wherein said first end is positionable adjacent to the ground to permit the smooth discharge of bales onto the ground.

The unloading platform is in contact with the ground for discharging the bales while the mobile harvester is moving. The harvester is particularly suitable for large quantities of hay bales which may be discharged on the ground at any suitable location. The system allows every discharge operation to take place within a specific area or zone so that the hay bales may be picked up by a non-mobile transferring device. Considering the large quantity of hay bales which may be accumulated by the harvester, the platforms are provided with conveyors for moving the hay bales from one platform to the other and finally for moving the hay bales from the platform(s) onto the ground at a specific location within the zone covered by the non-mobile transferring device.

The first conveyor mechanism moves the bales in a direction perpendicular to the direction in which they were loaded onto the loading platform from the receiving platform. The first conveyor mechanism may be activated by a sensor positioned on the loading platform at a location opposite the receiving platform when the former is fully loaded. The unloading platform is positioned adjacent to the loading platform for receiving bales from the loading platform when the first conveyor mechanism is actuated. The second conveyor mechanism may move the bales until they reach the first end of the unloading platform opposite the loading platform. The conveyors are generally actuated by an operator in a tractor pulling a hay baler that feeds the mobile harvester and are preferably actuated simultaneously by the same control device. The bales may be stored on the unloading platform before they are intentionally unloaded on the ground. The unloading platform preferably slopes downwards from the level of the loading platform to the level of the ground. The slope of the unloading platform is selected so that, when the second conveyor or both conveyors are activated, the rows of bales smoothly slide onto the ground.

The invention will now be described by way of a non-limiting embodiment with reference to the accompanying drawings, in which:-
Figure 1 is a side view of a harvester according to the invention,
Figure 2 is a top view of the harvester shown in Figure 1 seen along arrow 2 in Figure 1,
Figure 3 is a cross-sectional view along line 3-3 of Figure 2,
Figure 4 is a cross-sectional view taken along line 4-4 of Figure 2,
Figure 5 is an enlarged view of encircled portion 5 shown in Figure 2,
Figure 6 is a side view of a portion of figure 2 along arrows 6-6 of figure 2,
Figure 7 is an enlarged view of encircled portion 7 shown in figure 3,
Figure 8 is a side view of a chain and sprocket arrangement shown along arrows 8-8 in figure 5,
Figure 9 is a cross-sectional view taken along line 9-9 of figure 8,
Figure 10 is a cross-sectional view taken along line 10-10 of figure 8,
Figure 11 is a cross-sectional view taken along line 11-11 of figure 6,
Figure 12 is a cross-sectional view taken along line 12-12 of figure 6,
Figure 13 is an enlarged view of encircled portion 13 shown in figure 1,
Figure 14 is a rear end view of the harvester along arrows 14 shown in figure 13,
Figure 15 is a cross-sectional view taken along lines 15-15 of figure 14,
Figure 16 is a enlarged view of encircled portion 16 shown in figure 6 when a microswitch is actuated, and
Figures 17-22 illustrate different steps of loading and unloading hay bales using the havester of Figure 1.

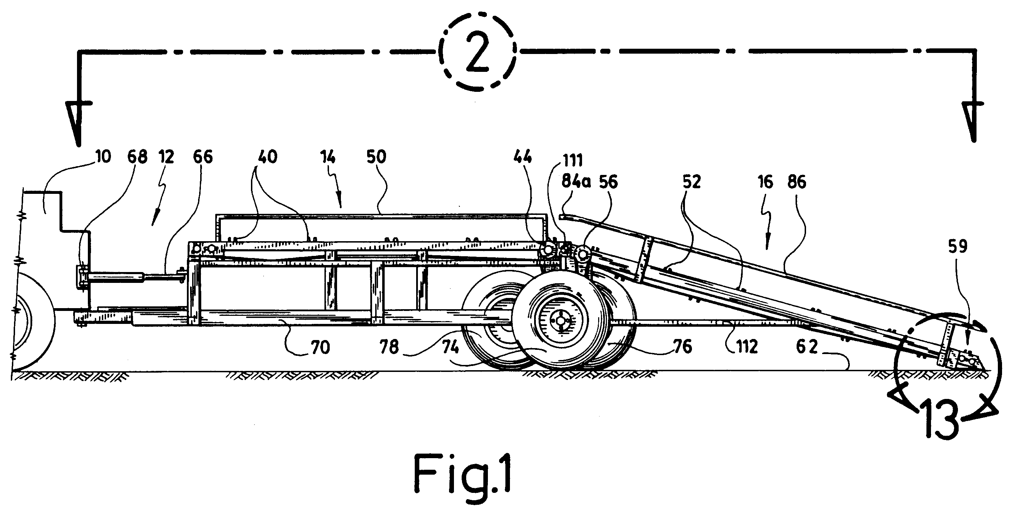

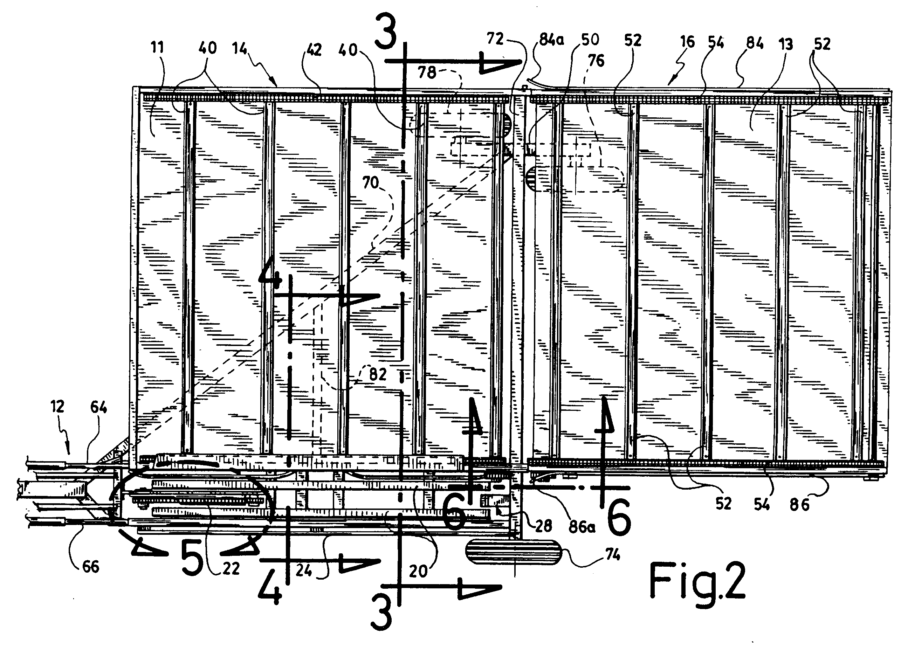

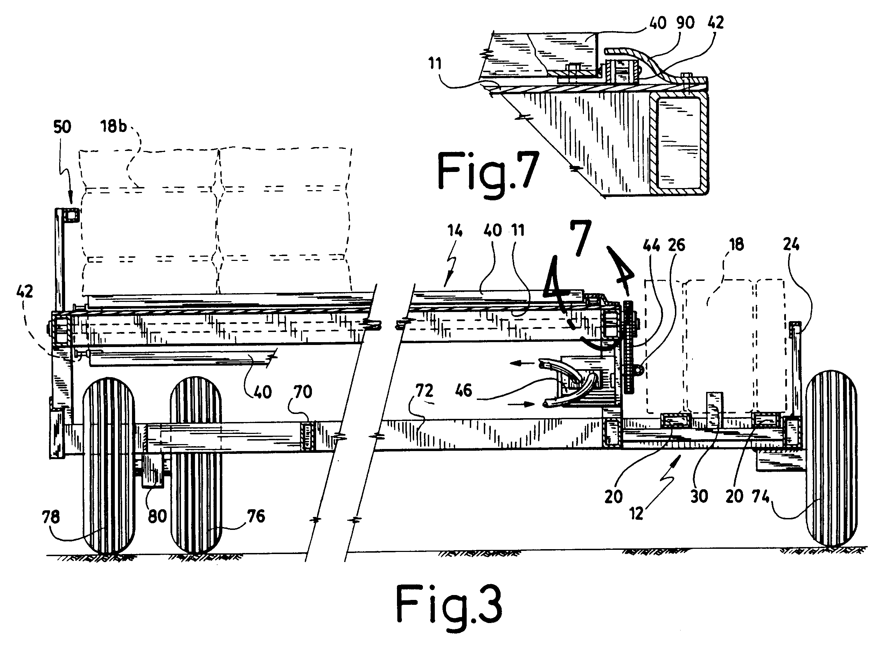

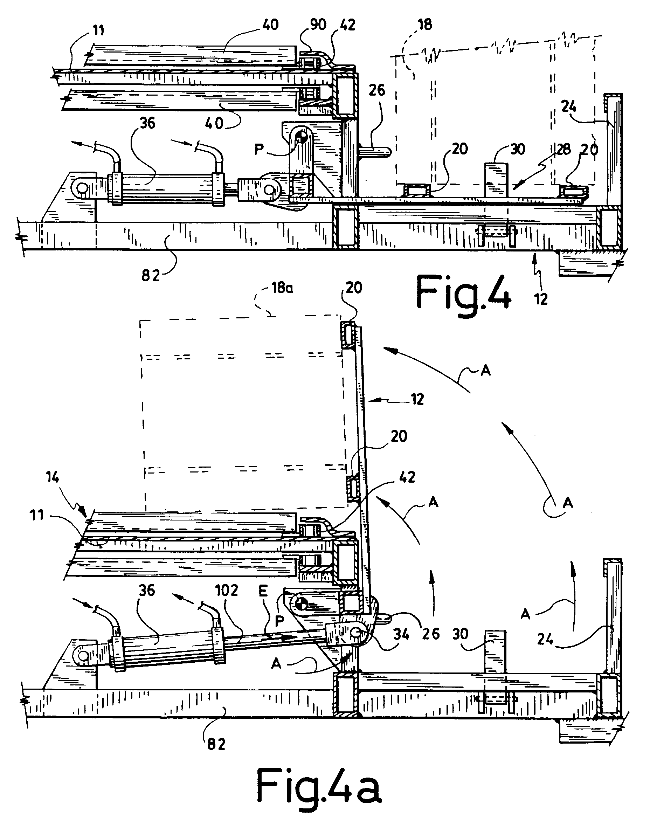

Figures 1 and 2 illustrate the mobile harvester adapted to be hooked behind a hay baler 10. It includes essentially three main parts comprising a retrieving or receiving platform 12, a loading platform 14 and a unloading platform 16. The hay bales which have been formed and tied up by the hay baler are individually pushed along the receiving platform 12 which longitudinally lies adjacent the loading platform 14. The hay bales 18, as shown by the dotted lines in figure 4, are pushed by the hay baler 10 along a pair of supporting rigid strips 20 by a chain and sprocket mechanism 22. The bales 18 are laterally guided by an exterior wall 24 and an internal wall 26. The internal wall 26 has an additional function which will be explained later.

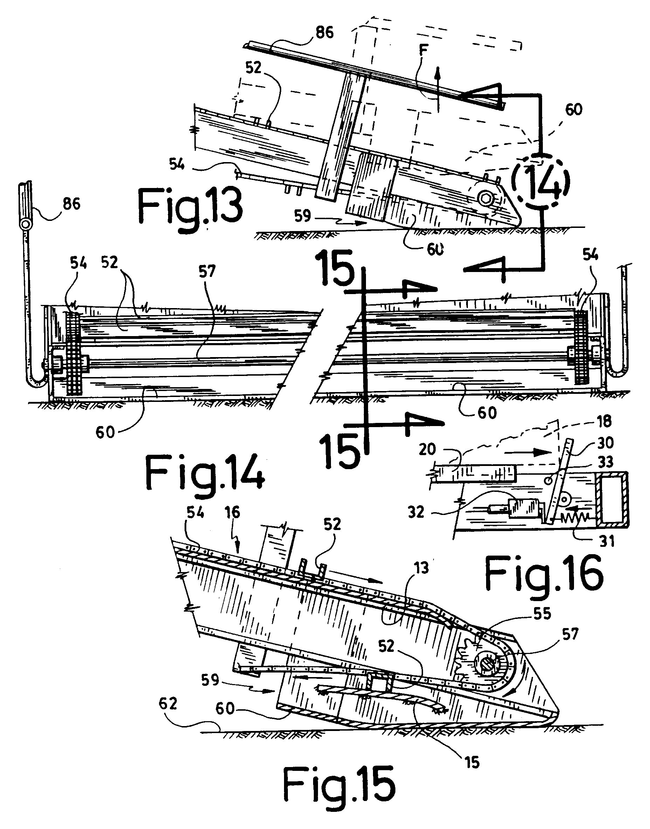

Once a first bale 18 is on the strips 20, the following one will push the preceding one until three bales are standing in a single row on the receiving platform 12. At that stage, the first bale on the receiving platform 12 hits a sensor device 28 which is a lever 30 adapted to tilt when pushed by the first bale so as to operate a microswitch 32. This operation is particularly shown in figure 16. It is pointed out that the chain and sprocket mechanism 22 is slightly shorter than the length of a bale, so that two bales cannot by themselves reach the lever 30. A third bale must be present.

At that stage, the receiving platform 12 is tilted upwardly about the pivoting axle P by a hydraulic piston 36 axially fixed at 34. The arrows A shown in figure 4a indicate the pivoting direction of the receiving platform 12. The hay bales 18 which were standing on the horizontal receiving platform 12 are raised and dropped on the loading platform 14 as shown in figure 4a. This tilting operation is particularly well performed with the help of the internal wall 26 which maintains the bale 18 away from the loading platform 14 during the first part of the tilting operation, thus preventing the bales 18 from being squeezed during their tilting operation. Furthermore, it is pointed out that the duration of the tilting operation may be made relatively short so that the receiving platform 12 returns to its original horizontal position before the next bale, coming from the hay baler 10, is ready to slide on the receiving platform 12. In practice, the chain 22 stops when the receiving platform 12 tilts.

When the next three hay bales lie on the receiving platform 12, and the sensor device 28 is actuated, the platform 12 is again tilted and the second three bales push on the first three bales 18a as shown in Figure 4a, so that the latter will transversely slide and make way for the second three hay bales.

The loading platform 14 is adapted to receive a plurality of rows of bales according to the procedure described above and is especially intended to receive 7 rows of three aligned bales which makes a total of 21 bales covering the loading platform 14. The loading platform 14 is particularly made of a series of U-shaped channels 40 perpendicularly oriented relative to the receiving platform 12. Each of the channels 40 is secured at each end to a driving chain 42 which is actuated in the direction of the arrow C by a sprocket arrangement mechanism 44 driven by a motor 46. The motor 46 which is usually a hydraulic motor is actuated by an operator when the loading platform 14 is covered with 21 hay bales. The operation of the motor 46 is also contemplated to be automatically actuated by a sensor device similar to device 28 which would be mounted on the rearward wall 50 (figure 3) of the loading platform 14 and which would be actuated by the rearmost bale 18b as shown in figure 3. The actuation of the motor 46 causes the bales located over the loading platform 14 to be gripped by the U-shaped channels and to move in the direction of the unloading platform 16.

The unloading platform 16 is substantially made in the same manner as the loading platform 14 and particularly includes a plurality of U-shaped channels 52 disposed parallel to the channels 40. The channels 52 are moved by driving chains 54 and the sprocket mechanism 56 which is actuated by the hydraulic motor 58.

The combination of one of the platforms 14 or 16 with their corresponding chains 42 and 54, their channels 40 and 52 and their sprocket mechanisms 44 and 56 may be referred to as conveyor mechanisms.

The unloading platform 16 slopes rearwardly downwards from its forward upper end which is substantially at the same level as the loading platform 14. The lower end is provided with skate members which are in contact with the ground and are adapted to slide on the ground when the harvester is moving forwardly. When the hay bales leave the loading platform 14 in the direction of the unloading platform 16, they are picked up by the U-shaped channels 52 and are moved to cover the unloading platform 16. Both the loading and unloading platforms 14 and 16 have an equal area which allows the 21 bales on the loading platform 14 to cover the area of the unloading platform 16. When the loading platform 14 has been emptied and before the bales on the unloading platform slide off of the unloading platform and onto the ground, both motors 45 and 58 are deactivated by a sensor device (not shown) on the wall 50 (see figure 3) to allow the loading platform 14 to be loaded with 21 further bales coming from the receiving platform 12. The unloading platform is spaced from the loading platform to leave a gap between both groups of bales. At that stage or at any previous or subsequent stage, the hay bales are adapted to be dropped on the ground at a specific location so that all the bales will be dropped within a predetermined zone that the harvester crosses as it moves to-and-fro across the field. The procedure for unloading the bales will be explained in greater detail later.

The skate members 59 are particularly shown in Figure 15. Each comprises a metal plate 60 which extends from the rear of the unloading platform 16 in a forward direction and which will slide over the ground 62 while the harvester 10 moves forwardly.

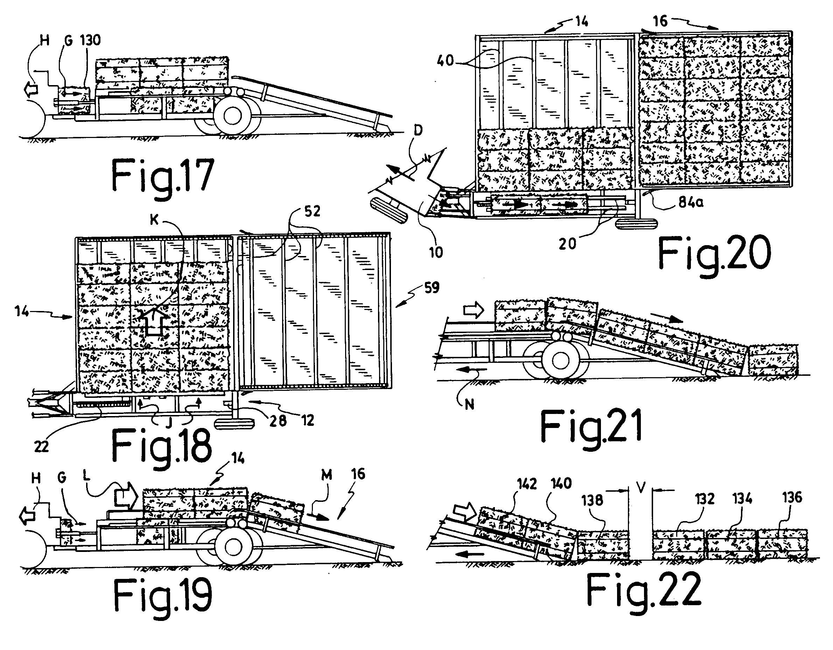

The hay baler 10 is connected to the receiving platform 12 by a pair of independent piston rods 64 and 66 pivotally hooked to the hay baler 10 by pivoting axles 68 so as to allow the baler 10 to turn in the direction of the arrow D as shown in Figure 20. The loading platform 14 is supported by a undercarriage comprising a diagonal beam 70 and a tranversal beam 72. The transversal beam 72 is supported at one end by a wheel 74 and at the other end by a pair of wheels 76 and 78 which are pivotally mounted at both ends of a connecting beam 80. A cross-beam 82 is especially intended to support the hydraulic piston 36.

The unloading platform 16 is provided with a pair of side walls 84 and 86 which have deflection members 84a and 86a at their forward ends adjacent the loading platform and which will guide the bales coming from the loading platform 14. This is necessary if bales from the loading platform project slightly outside the gap between the two walls 84 and 86.

The slope of the unloading platform relative to the ground is such that the bales cannot slide down the unloading platform by themselves. Only the traction of the transversal U-shaped channels 52 can activate the downward movement of the bales and the discharging operation over the skate members 59. The slope of the unloading platform 16 is generally less than 30 degrees considering that the loading platform 14 is about two to three feet above the ground.

The chain 42 located on the side of the receiving platform 12 is covered by a protective strip 90 so that the bales, when tilted from the receiving platform to the loading platform 14, will not interfere with the operation of the chain 42.

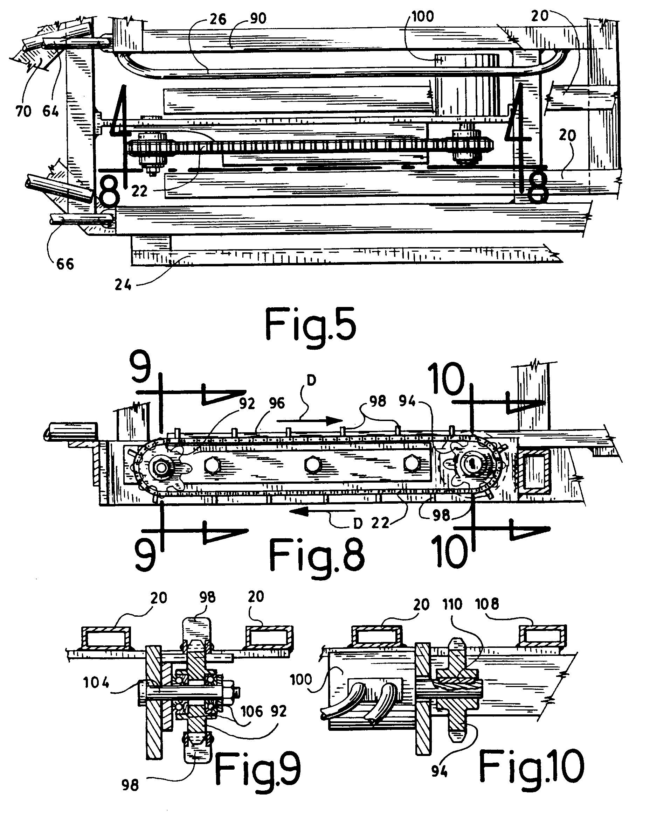

Figures 9 and 10 illustrate in greater detail the operation of the sprocket mechanism 22 which is essentially made of a pair of sprocket wheels 92 and 94 around which a chain 96 provided with a plurality of teeth 98 moves in the direction of the arrow D to drag the bales one after the other onto the receiving platform 12. The sprocket wheel 94 is driven by the hydraulic motor 100. As stated above, the length of the chain 96, that is, the distance between the sprocket wheels 92 and 94, is designed to be slightly shorter than the length of a bale so that, when the second bale is pushed forward by the chain 96, it will not quite reach the sensor device 28 ad accordingly will not operate the hydraulic piston 36 at that stage. The piston 36 will be actuated in the direction of the arrow E only when the third bale has been loaded on the receiving platform 12. Figure 9 shows that the sprocket wheel 92 is freely mounted on the axle 104 through a ball bearing arrangement 106 while the sprocket wheel 94 is secured to the axle 108 by a key 110.

Although the unloading platform 16 is permanently sloping downwards during the operation of the harvester, it is possible to raise the skate members 59 slightly above the ground when the harvester is not dispensing bales, such as when the harvester moves on a road or in the field to reach its operating destination. For this purpose, the unloading platform 16 is provided with an undercarriage comprising horizontal beams 112 extending from the middle of the platform 16 to a vertical beam 114 at the forward end of the platform 16 (see Figures 1 and 6). A rubber damper 116 is mounted between the vertical beam 114 and a horizontal beam 118 located at the rear lower end of the loading platform 14. Above the rubber damper 116, a pivoting plate 120 is actually mounted around an axle 122. The plate 120 is adapted to vertically pivot around the axle 122 by being manually pulled downwards by a handle 124. This operation is performed by raising the rear end of the unloading platform 16 in the direction of the arrow F, shown in figure 6a, to make a space between the rubber damper 116 and the horizontal beam 118. The plate 120 is then lowered by being pivoted around the axle 122 to fill the space between the rubber damper 116 and the beam 118.

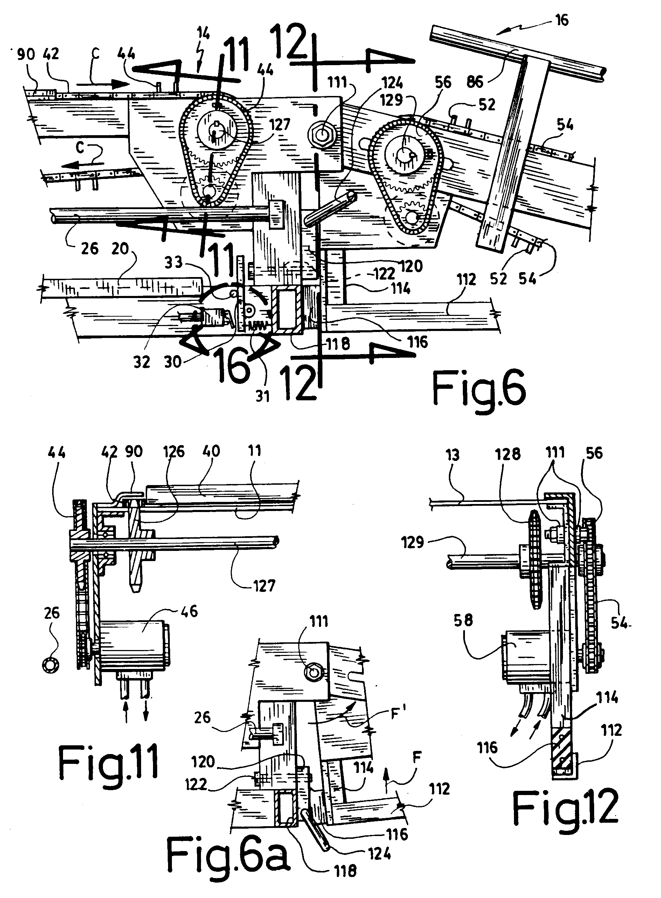

As particularly shown in figures 11 and 12, the sprocket mechanisms 44 and 56 drive the U-shaped channels 40 through toothed wheels 126 and 128 respectively. For the sake of clarity, only one U-shaped channel 40 is shown.

Figures 17-22 illustrate different stages of the operation of the harvester. Figure 17 is a side view of the harvester showing a bale 130 moving in the direction G while the hay baler moves in the direction H. After the receiving platform 12 has been loaded, the bales are tilted in the direction of the arrows J to push the bales on the loading platform 14 in the direction of the arrow K. When the loading platform 14 is fully covered with bales, the operator of the harvester or an automatic sensor actuates the loading platform in the direction of the arrow L to move the bales onto the unloading platform 16 in the direction of the arrow M. The bales are moved at will by an operator and stopped at will but they are generally moved so that a complete load of the loading platform is transferred onto the unloading platform 16 and then stopped. Thus, as shown in figure 20, the loading platform 14 is filled while the hay baler 10 moves in the direction of the arrow D. As shown in figure 20, the hay baler is adapted to move at an angle relative to the loading and unloading platforms 14 and 16 so as to follow a back and forth pathway through the field where the hay is picked up. An advantage of the present embodiment is that the operator may dump the hay bales from both the loading and the unloading platforms at any given location on the field. As shown in figure 21, the bales have started to be unloaded at the desired position while the hay baler moves in the direction of the arrow N. With this arrangement, seven sets of three consecutive bales are neatly deposited on the ground in an adjacent manner. The first set of three bales are shown unloaded in Figure 22. Because the bales are moved by the driving chains 42 and 54, and because the two platforms are spaced apart by a small distance, the next three bales 138, 140 and 142 will be spaced from the first group of bales 132, 134 and 136 by a distance V. This distance is sufficient to allow bale gripping instruments to pick up three consecutive rows of seven bales without interfering with the following three consecutive rows of bales. The distance V depends on the space between the two platforms 14 and 16 and also on the difference between the speed of the tractor pulling the baler 10 and the speed of the conveyor unloading the bales from the unloading platform. If a greater distance V is preferred, the conveyor of the unloading platform 16 is stopped momentarily after unloading a group of twenty one bales and before unloading the next group of bales. Depending on the type of the gripping instrument used, the distance V may be more suitably extended to about four feet. Such a gripping instrument operated from a tractor picks up three consecutive rows of seven bales and places them onto a wagon which will transport many dozens of bales to a warehouse location. Such a gripping implement is operated by a person who will only have to move very little to pick up all the bales left on the ground. The novel harvester will leave all the bales within a specified location and in groups of three adjacent rows of seven bales, ready to be picked up by the gripping implement. Such a method of operation saves time and makes it possible to save the labor that would be required if the bales are spread all over the field. Furthermore, because the gripping instrument only needs to move within a very restricted area, it does not require a transporting tractor.

It should be understood that the receiving platform does not form part of the broadest aspect of the invention.

## Claims

1. A mobile harvester for handling hay bales, said harvester comprising:
a loading platform (14) positionable to the side of a receiving platform (12) which is arranged to successively and transversely load rows of bales onto said loading platform, said loading platform having a first conveyor mechanism (40, 42) for moving bales in the longitudinal direction of rows of bales on said loading platform;
first means (44, 46) for actuating said first conveyor mechanism (40, 42);
an unloading platform (16) positioned adjacent to said loading platform (14) for receiving bales from said first conveyor mechanism (40, 42), said unloading platform (16) having a second conveyor mechanism (52, 54) for moving bales in the longitudinal direction of rows of bales on said unloading platform and for discharging those bales from a first end of said unloading platform opposite said loading platform; and
second means (56, 58) for actuating said second conveyor mechanism (52, 54);
wherein said first end is positionable adjacent to the ground (62) to permit the smooth discharge of bales onto the ground.

2. A mobile harvester according to claim 1, wherein:
said first conveyor mechanism (40, 42) comprises elongate members (40) along which rows of bales are arranged to slide transversely as said loading platform (14) is loaded by said receiving platform (12);
said second conveyor mechanism (52, 54) is arranged to move bales from a second end of said unloading platform (16), said second end being at substantially the same height as the adjacent part of said first conveyor mechanism (40, 42); and
said first end of said unloading platform (16) is supported on a skate member (59) which is arranged to slide over the ground when said harvester is moving.

3. A mobile harvester according to claim 1 or 2, further comprising:
an elongate bale receiving platform (12) for receiving successive bales to form a row of bales, said loading platform (14) being positioned adjacent to the side of said receiving platform (12); and
means (36) for displacing a row of bales from said receiving platform (12) and onto said loading platform (14), so as to push sideways a row of bales previously loaded onto said loading platform by said displacing means (36).

4. A mobile harvester according to claim 3, wherein said loading platform (14) is at substantially the same height as said receiving platform (12), and said displacing means (36) is arranged to pivot said receiving platform to tilt a row of bales onto said loading platform.

5. A harvester according to claim 3 or 4, wherein said receiving and loading platforms (12, 14) are mounted on wheels (74, 76, 78) so as to be located above the ground (62), and said unloading platform (16) slopes downwards towards said first end.

6. A harvester according to any one of claims 3 to 5, further comprising first sensor means (28) for actuating said displacing means (36), said first sensor means being located at one end of said elongate receiving platform (12) and arranged to be contacted by a bale when said receiving platform is fully loaded with a row of bales.

7. A harvester according to claim 6, further comprising second sensor means positioned on said loading platform (14) at a location opposite said receiving platform (12) for actuating said first conveyor mechanism (40, 42) when said loading platform is fully loaded with rows of bales.

8. A harvester according to any one of claims 1 to 7, wherein said second conveyor mechanism (52, 54) comprises elongate members (52).

9. A harvester according to claims 2 and 8, wherein each elongate member (40, 52) has a U-shaped cross-section.

10. A harvester according to any one of claims 1 to 9, wherein said unloading platform (16) is slightly spaced from said loading platform (14) so as to maintain a first gap between a group of bales on said loading platform and a group of bales on said unloading platform, whereby, when both groups of bales are deposited on the ground in succession, there is a second gap between the groups of deposited bales which is substantially the same as the first gap.

## Patentansprüche

1. Mobiles Erntegerät für die Handhabung von Heuballen, wobei das Erntegerät aufweist:
eine Ladeplattform (14), die an der Seite einer Aufnahmeplattform (12) positionierbar ist, welche so angeordnet ist, daß sie nacheinander und in Querrichtung Reihen von Ballen auf die Ladeplattform lädt, wobei die Ladeplattform einen ersten Fördermechanismus (40, 42) aufweist, um die Ballen in Längsrichtung der Reihen von Ballen auf der Ladeplattform zu bewegen,
einer ersten Einrichtung (44, 46) zum Betätigen des ersten Fördermechanismus (40, 42),
eine Entladeplattform (16), die neben der Ladeplattform (14) angeordnet ist um Ballen von dem ersten Fördermechanismus (40, 42) aufzunehmen, wobei die Entladeplattform (16) einen zweiten Fördermechanismus (52, 54) hat, um Ballen in Längsrichtung der Reihen von Ballen auf der Entladeplattform zu bewegen und um diese Ballen von einem ersten Ende der Entladeplattform abzugeben, welches der Ladeplattform entgegengesetzt liegt, und
einer zweiten Einrichtung (56, 58), um den zweiten Fördermechanismus (52, 54) zu betätigen,
wobei das erwähnte erste Ende nahe am Erdboden (62) angeordnet werden kann, um ein sanftes Abladen der Ballen auf den Boden zu ermöglichen.

2. Mobiles Erntegerät nach Anspruch 1, wobei:
der erste Fördermechanismus (40, 42) längliche Teile (40) aufweist, entlang welcher Reihen von Ballen angeordnet werden, so daß sie in Querrichtung gleiten, während die Ladeplattform (14) durch die Aufnahmeplattform (12) beladen wird,
der zweite Fördermechanismus (52, 54) so angeordnet ist, daß er Ballen von einem zweiten Ende der Entladeplattform (16) bewegt, wobei das zweite Ende im wesentlichen auf derselben Höhe liegt, wie der danebenliegende Teil des ersten Fördermechanismus (40, 42), und wobei
das erste Ende der Entladeplattform (16) sich auf einem Kufenteil (59) abstützt, welches so angeordnet ist, daß es über den Boden gleitet, wenn sich das Erntegerät bewegt.

3. Mobiles Erntegerät nach Anspruch 1 oder 2, welches weiterhin aufweist:
eine längliche Ballenaufnahmeplattform (12) für das Aufnehmen aufeinanderfolgender Ballen, um eine Reihe von Ballen zu bilden, wobei die Ladeplattform (14) an der Seite der Aufnahmeplattform (12) angeordnet ist, und
eine Einrichtung (36) für das Verschieben einer Reihe von Ballen von der Aufnahmeplattform (12) und auf die Ladeplattform (14), um so eine vorher auf die Ladeplattform geladene Reihe von Ballen durch die Verschiebeeinrichtung (36) seitwärts zu verschieben bzw. wegzudrücken.

4. Mobiles Erntegerät nach Anspruch 3, wobei die Ladeplattform (14) im wesentlichen auf derselben Höhe liegt, wie die Aufnahmeplattform (12) und wobei die Verschiebeeinrichtung (36) so angeordnet ist, daß sie die Aufnahmeplattform verschwenkt, um eine Reihe von Ballen auf die Ladeplattform abzukippen.

5. Erntegerät nach Anspruch 3 oder 4, wobei die Aufnahme- und die Ladeplattform (12, 14) auf Rädern (74, 76, 78) montiert sind, so daß sie oberhalb des Bodens (62) angeordnet sind, und wobei die Entladeplattform (16) in Richtung des ersten Endes nach unten geneigt verläuft.

6. Erntegerät nach einem der Ansprüche 3 bis 5, welches weiterhin eine erste Sensoreinrichtung (28) zum Betätigen der Verschiebeeinrichtung (36) aufweist, wobei die erste Sensoreinrichtung sich an einem Ende der länglichen Aufnahmeplattform (12) befindet und so angeordnet ist, daß sie von einem Ballen berührt wird, wenn die Aufnahmeplattform mit einer Reihe von Ballen vollständig beladen ist.

7. Erntegerät nach Anspruch 6, welches weiterhin eine zweite Sensoreinrichtung aufweist, die an der Ladeplattform (14) an einer Stelle angeordnet ist, welche entgegengesetzt von der Aufnahmeplattform (12) liegt, um den ersten Fördermechanismus (40, 42) zu betätigen, wenn die Ladeplattform mit Reihen von Ballen voll beladen ist.

8. Erntegerät nach einem der Ansprüche 1 bis 7, wobei die zweite Fördereinrichtung (52, 54) längliche Teile (52) aufweist.

9. Erntegerät nach den Ansprüchen 2 und 8, wobei jedes längliche Teil (40, 52) einen U-förmigen Querschnitt hat.

10. Erntegerät nach einem der Ansprüche 1 bis 9, wobei die Entladeplattform (16) einen geringen Abstand von der Ladeplattform (14) hat, um so eine erste Lücke zwischen einer Gruppe von Ballen auf der Ladeplattform und einer Gruppe von Ballen auf der Entladeplattform aufrechtzuerhalten, wodurch dann, wenn beide Gruppen von Ballen nacheinander auf dem Boden abgelegt werden, eine zweite Lücke zwischen den Gruppen der abgelegten Ballen vorhanden ist, die im wesentlichen dieselbe ist wie die erste Lücke.

## Revendications

1. Une machine agricole mobile pour manipuler des balles de foin, ladite machine agricole comprenant :
une plate-forme de chargement (14) apte à être positionnée sur le côté d'une plate-forme de réception (12) elle-même conçue pour charger successivement et transversalement des rangées de balles sur ladite plate-forme de chargement, ladite plate-forme de chargement ayant un premier mécanisme-convoyeur (40, 42) pour déplacer des balles dans la direction longitudinale des rangées de balles sur ladite plate-forme de chargement;
des premiers moyens (44, 46) pour actionner ledit premier mécanisme-convoyeur (40, 42);
une plate-forme de déchargement (16) adjacente à ladite plate-forme de chargement (14) pour recevoir des balles en provenance dudit premier mécanisme-convoyeur (40, 42), ladite plate-forme de déchargement (16) ayant un second mécanisme-convoyeur (52, 54) pour déplacer des balles dans la direction longitudinale des rangées de balles sur ladite plate-forme de déchargement et pour décharger ces balles d'une première extrémité de ladite plate-forme de déchargement opposée à ladite plate-forme de chargement; et
des seconds moyens (56, 58) pour actionner ledit second mécanisme-convoyeur (52, 54);
dans laquelle ladite première extrémité est apte à être positionnée adjacente au sol (62) pour permettre le déchargement en douceur des balles sur le sol.

2. Machine agricole mobile selon la revendication 1, dans laquelle:
ledit premier mécanisme-convoyeur (40, 42) comprend des éléments allongés (40) le long desquels des rangées de balles sont arrangées pour glisser transversalement à mesure que ladite plate-forme de chargement (14) est chargée par ladite plate-forme de réception (12);
ledit second mécanisme-convoyeur (52, 54) est arrangé pour déplacer des balles à partir d'une seconde extrémité de ladite plate-forme de déchargement (16), ladite seconde extrémité étant substantiellement à la même hauteur que la partie adjacente dudit premier mécanisme-convoyeur (40, 42); et
ladite première extrémité de ladite plate-forme de déchargement (16) est supportée sur un élément-patin (59) positionné pour glisser sur le sol lorsque la machine agricole se déplace.

3. Machine agricole mobile selon la revendication 1 ou 2, comprenant en outre:
une plate-forme de réception de balles allongée (12) pour recevoir des balles successives afin de former une rangée de balles, ladite plate-forme de chargement (14) étant positionnée adjacente au côté de ladite plate-forme de réception (12); et
des moyens (36) pour déplacer une rangée de balles de ladite plate-forme de réception (12) vers ladite plate-forme de chargement (14), de sorte à pousser de côté une rangée de balles préalablement chargée sur ladite plate-forme de chargement par lesdits moyens de déplacement (36).

4. Machine agricole mobile selon la revendication 3, dans laquelle ladite plate-forme de chargement (14) est substantiellement à la même hauteur que ladite plate-forme de réception (12), et lesdits moyens de déplacement (36) sont arrangés pour pivoter ladite plate-forme de réception afin de décharger une rangée de balles sur ladite plate-forme de chargement.

5. Machine agricole selon la revendication 3 ou 4, dans laquelle lesdites plate-forme de réception et de chargement (12, 14) sont montées sur des roues (74, 76, 78) de sorte à être situées au-dessus du sol (62), et ladite plate-forme de déchargement (16) est inclinée vers le bas vers ladite première extrémité.

6. Machine agricole selon l'une quelconque des revendications 3 à 5, comprenant en outre des premiers moyens de détection (28) pour activer lesdits moyens de déplacement (36), lesdits premiers moyens de détection étant situés à une extrémité de ladite plate-forme de réception allongée (12) et arrangée pour entrer en contact avec une balle lorsque ladite plate-forme de réception est chargée à pleine capacité par une rangée de balles.

7. Machine agricole selon la revendication 6, comprenant en outre des seconds moyens de détection placés sur ladite plate-forme de chargement (14) à un emplacement opposé à ladite plate-forme de réception (12) pour activer ledit premier mécanisme-convoyeur (40, 42) lorsque ladite plate-forme de chargement est chargée à pleine capacité par des rangées de balles.

8. Machine agricole selon l'une quelconque des revendications 1 à 7, dans laquelle ledit second mécanisme-convoyeur (52, 54) comprend des éléments allongés (52).

9. Machine agricole selon les revendications 2 et 8, dans laquelle chaque élément allongé (40, 52) a une section transversale en forme de U.

10. Machine agricole selon l'une quelconque des revendications 1 à 9, dans laquelle ladite plate-forme de déchargement (16) est légèrement espacée de ladite plate-forme de chargement (14) afin de maintenir un premier espacement entre un groupe de balles sur ladite plate-forme de chargement et un groupe de balles sur la plate-forme de déchargement, de sorte que, lorsque les deux groupes de balles sont déposées sur de sol en succession, il y a un second espacement entre les groupes de balles déposées qui est substantiellement le même que le premier espacement.
